# EUROPEAN PATENT APPLICATION

(11) **EP 4 803 177 A1**
(43) Date of publication of application: **09.09.2026**
(21) Application number: 24884401.1
(22) Date of filing: 12.10.2024
(51) Int. Cl.: B01D 53/14

(54) **PREPARATION OF A COMPOUNDED ALCOHOL AMINE ABSORBENT FOR FLUE GAS WITH LOW CO2 PARTIAL PRESSURE AND USE THEREOF**

(30) Priority: 01.11.2023 CN 202311440948
(71) Applicant: DATANG NORTH CHINA ELECTRIC POWER TEST AND RESEARCH INSTITUTE, Beijing 100040 (CN); China Datang Corporation Science and Technology General Research Institute, Beijing 102211 (CN)
(72) Inventor: ZHANG, Li, Beijing 100040 (CN); WANG, Yunyang, Beijing 100040 (CN); JIN, Xuliang, Beijing 100040 (CN); WANG, Haigang, Beijing 100040 (CN); HUANG, Zhongyuan, Beijing 100040 (CN); ZHANG, Zhen, Beijing 100040 (CN); YANG, Junhan, Beijing 100040 (CN); JIA, Jia, Beijing 100040 (CN); YIN, Aiming, Beijing 100040 (CN); DONG, Lei, Beijing 100040 (CN); YIN, Dong, Beijing 100040 (CN); MENG, Fanqin, Beijing 100040 (CN)
(74) Representative: Chung, Hoi Kan
(86) International application number: PCT/CN2024/124368
(87) International publication number: WO 2025/092397

(57) **Abstract**

A polyhydric alcohol amine absorbent suitable for a CO₂ capture process from a flue gas with a low CO₂ partial pressure, which takes continuous operation stability and safety into account. The polyhydric alcohol amine absorbent comprises the following main components: a main absorbent, an auxiliary absorbent, an antioxidant, a corrosion inhibitor and water, and the concentration of the absorbent is 22-58% by mass fraction, wherein the main absorbent comprises one or two of diethylenetriamine, N,N-diethylethanolamine and hydroxyethyl ethylenediamine; the auxiliary absorbent comprises one or two of monoethanolamine, 2-amino-2-methyl-1,3-propanediol, 2-amino-2-ethyl-1,3-propanediol and 2-amino-2-methyl-1-propanol; the antioxidant comprises one or two of butanone oxime, acetoxime, hydrazine carbonate and ammonium sulfite; the corrosion inhibitor is sodium vanadate; and the balance is desalinated water.

## Description

### CROSS-REFERENCE TO RELATED APPLICATIONS

The present application claims the priority to Chinese Patent Application No. 2023114409484, filed with the China National Intellectual Property Administration on November 01, 2023, entitled " PREPARATION OF A COMPOUNDED ALCOHOL AMINE ABSORBENT FOR FLUE GAS WITH LOW CO2 PARTIAL PRESSURE AND USE THEREOF", the entire content of which is hereby incorporated by reference.

### TECHNICAL FIELD

The present application relates to the field of post-combustion chemical absorption of CO₂ in thermal power plants, and particularly relates to preparation and application of a compound alcohol amine absorbent for flue gas with low CO₂ partial pressure.

### BACKGROUND

With the increasing dependence of modern society on energy due to socio-economic development, the extensive use of fossil fuels has led to a series of environmental issues. CO₂ absorption and storage technologies, which involve the separation and long-term isolation of CO₂ from major industrial emission sources, represent a key strategy for reconciling the reliance on fossil fuels with the need to mitigate climate change. The chemical absorption is considered a crucial approach for large-scale CO₂ absorption. The primary amine, such as the MEA, has strong activity and can react with CO₂ quickly, which helps reduces the height of CO₂ absorption columns in coal-fired power plants and thereby lowers the investment cost. In addition, the MEA is easy to produce, which can ensure that the supply of the raw materials is stable. However, the MEA process faces huge challenges in practical applications. The reaction between MEA and CO₂ is highly exothermic and produces relatively stable carbamates. Regeneration of the solvent requires a large amount of energy due to the need for high-temperature decomposition of these carbamates. In addition, the MEA tends to react with the activation gas in the flue gas, resulting in substantial MEA loss. The byproducts formed during these side reactions further exacerbates the corrosion of the device and promotes the degradation of the MEA.

Currently, single-component alkanolamine absorbents exhibit significant limitations in capturing CO₂ from flue gas with low CO₂ partial pressure. These limitations include slow reaction rates, low absorption capacity, and high regeneration energy consumption. Accordingly, there is a need to develop a composite alkanolamine absorbent suitable for flue gas with low CO₂ partial pressure.

### SUMMARY

The purpose of the present application is to provide a compound alcohol amine absorbent for flue gas with low CO₂ partial pressure, and an application of CO₂ absorption through an optimized reflux process by means of regenerated gas condensate.

The technical problem to be solved by the present application is to improve the reaction rate, increase the absorption capacity, and reduce the regeneration energy consumption.

The objectives of this application may be achieved by using the following technical solutions:

A preparation method of a polyhydric alcohol amine absorbent for flue gas with low CO2 partial pressure includes the following steps.

S1: preparing the polyhydric amine absorbent which is composed of the following components in percentage by mass: 18% to 40% of a main absorbent, 3% to 15% of an auxiliary absorbent, 0.5% to 1.5% of an antioxidant, 0.5% to 1.5% of a corrosion inhibitor, and 42% to 78% of water;

S2: the main absorbent includes one or more of diethylenetriamine, N, N-diethyl ethanolamine and hydroxyethyl ethylenediamine.

S3: the auxiliary absorbent includes one or more of mono-ethanolamine, 2-amino-2- methyl-1, 3-propanediol, 2-amino-2 -ethyl-1, 3-propanediol, and 2-amino-2-methyl-1-propanol.

S4: the antioxidant includes one or more of butanone oxime, acetone oxime, hydrazine carbonate, and ammonium sulfite.

S5: the corrosion inhibitor is sodium vanadate.

Further, the polyhydric amine absorbent may be prepared as follows.

The main absorbent is added to the aqueous solution, and is evenly mixed. The auxiliary absorbent is added and then stirring is performed at a temperature of 30°C to 40°C for 30 to 45 mins. Then the antioxidant and the corrosion inhibitor are added, and the mixture is fully mixed to obtain the polyhydric amine absorbent.

The dosage ratio of the main absorbent, the water, the auxiliary absorbent, the antioxidant, and the corrosion inhibitor is (18-40) g: (4278) mL: (3-15) g: (0.5-1.5) g: (0.5-1.5) g.

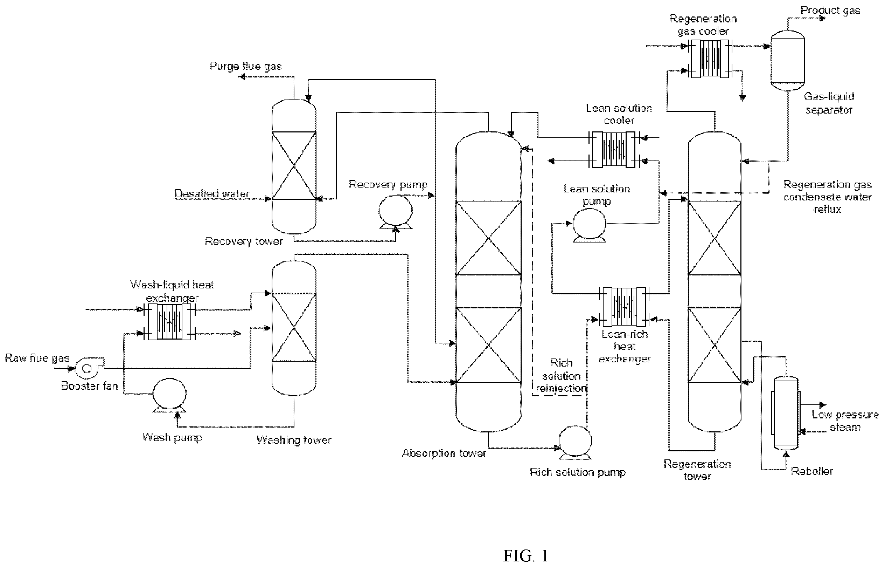

An application of a polyhydric amine absorbent for flue gas with low CO₂ partial pressure, as shown in FIG. 1, includes the following steps.

S1: the flue gas that has been cooled by the washing tower is introduced into the bottom of the absorption tower where the flue gas is in countercurrent contact with the lean solution, which is introduced into the absorption tower the top of the absorption tower, for CO₂ absorption.

S2: the flue gas subjected to CO₂ absorption is discharged from the top of the absorption tower and is then introduced into the recovery tower and finally is discharged after absorbent extraction.

S3: the extracted absorbent which is called rich solution is discharged from the bottom of the absorption tower, and a part of the rich solution is reinjected into the top of the absorption tower together with the lean solution, and the other part of the rich solution is introduced into a top of a regeneration tower for desorption after being subjected to heat exchange by the lean-rich heat exchanger.

S4: The lean solution subjected to desorption is fed back into the top of the absorption tower through the lean-rich heat exchanger and a lean solvent cooler. The regenerated gas containing CO₂ at the top of the regeneration tower is purified by a regeneration cooler and the gas-liquid separator to obtain the product gas CO₂.

S5: The condensed water from the regenerated gas is refluxed to a lean absorbent inlet pipeline of the absorption tower.

Beneficial effects of this application are as follows.
1. In the technical solution of the present application, the reaction between the CO₂ and the tertiary amine occurs at the same time as the reaction between the CO₂ and the auxiliary absorbent. The auxiliary absorbent such as primary amine or sterically hindered amine rapidly combines with the CO₂ at the gas-liquid interface, transferring the CO₂ to the main absorbent in the liquid phase body, and is regenerated. The auxiliary absorber molecule repeatedly shuttles between the gas-liquid interface and the liquid phase body until the solution absorption reaches saturation. A small amount of auxiliary absorbent can effectively activate the main absorbent, greatly shortening the reaction process between the main absorbent and the CO₂, and improving the reaction rate.
2. The technical solution of the present application can ensure that the absorbent has a good absorption efficiency of 85% to 92% in a low CO₂ environment, and stably runs for more than 2 years in an oxygen-rich environment, with an annual average performance attenuation rate of less than 5% (based on a CO₂ capture rate). In addition, the absorbent of the present application is also suitable for CO₂ capture systems of industrial flue gas or tail gas such as flue gas, natural gas treatment, lime kiln flue gas, blast furnace gas, coke oven gas and the like of coal-fired power plants.

### BRIEF DESCRIPTION OF DRAWINGS

FIG. 1 is a process flow diagram of CO₂ capture.

### DETAILED DESCRIPTION OF THE EMBODIMENTS

The technical solutions in the embodiments of this application are clearly and completely described below with reference to the embodiments of this application. Obviously, the above-described embodiments are only illustrative and do not represent all embodiments of the present application. All other embodiments obtained by a person of ordinary skill in the art based on the embodiments of this application without creative efforts shall fall within the protection scope of this application.

### Embodiment 1

The flue gas flow rate at the capturing system inlet was 2857 Nm³/h, with a CO₂ concentration of 4.493%. The inlet temperature of the flue gas entering the absorption tower was 40 °C. The circulation flow rate of the absorbent was 4.5 m³/h. The regeneration tower operated at a pressure of 10 kPa. The stripping steam had parameters of 0.4 MPa(g) and 150 °C. The condensate return valve on the regeneration gas line was closed. Using the absorbent formulation developed in the present application, the CO₂ capture rate of the system was measured at 88.07%, and the regeneration energy consumption was 3.234 GJ per ton of CO₂.

### Comparative Example 1

The flue gas flow rate at the capturing system inlet was 2857 Nm³/h, with a CO₂ concentration of 4.493%. The inlet temperature of the flue gas entering the absorption tower was 40 °C. The circulation flow rate of the absorbent was 4.5 m³/h. The regeneration tower operated at a pressure of 10 kPa. The stripping steam had parameters of 0.4 MPa(g) and 150 °C. The condensate return valve on the regeneration gas line was opened. Using the absorbent formulation developed in the present application, the CO₂ capture rate of the system was measured at 91.35%, and the regeneration energy consumption was 3.178 GJ per ton of CO₂.

Embodiment 1 and Comparative Example 1 were conducted under identical flue gas and absorbent conditions to compare the optimization effect of the regeneration gas condensate reflux process. The results demonstrate that, after the optimization of the regeneration gas condensate reflux process, the capture efficiency was improved, while the regeneration energy consumption was reduced.

### Embodiment 2

The flue gas flow rate at the capturing system inlet was 2700 Nm³/h, with a CO₂ concentration of 4.6%. The inlet temperature of the flue gas entering the absorption tower was 40 °C. The circulation flow rate of the absorbent was 4.0 m³/h. The regeneration tower operated at a pressure of 10 kPa. The stripping steam had parameters of 0.4 MPa(g) and 150 °C. Using the formulation with AMPD as the main absorbent, the CO₂ capture rate of the system was measured at 88.71%, and the regeneration energy consumption was 3.72 GJ per ton of CO₂.

### Embodiment 3

The flue gas flow rate at the capturing system inlet was 2600 Nm³/h, with a CO₂ concentration of 4.6%. The inlet temperature of the flue gas entering the absorption tower was 37.8 °C. The circulation flow rate of the absorbent was 5.0 m³/h. The regeneration tower operated at a pressure of 10 kPa. The stripping steam had parameters of 0.4 MPa(g) and 150 °C. Using the formulation with AEEA as the main absorbent, the CO₂ capture rate of the system was measured at 90.10%, and the regeneration energy consumption was 3.59 GJ per ton of CO₂.

The flue gas parameters of a natural gas power plant located in Beijing are shown in Table 1.

**Table 1. flue gas parameters of a natural gas power plant in Beijing**

| Item | | Value | |
|---|---|---|---|
| Flue gas density /(kg/Nm³) | | 1.253 | |
| Flue gas temperature /°C | | 79 | |
| Flue gas pressure /kPa | | 101.33 | |
| Flue gas flow rate /(m/s) | | 23.1 | |
| Flue gas mass flow rate /(kg/s) | | 708.3 | |
| Flue gas composition | Ar/% | | 0.89 |
| | CO₂/% | | 4.6 |
| | H₂O/% | | 8.23 |
| | N₂/% | | 74.71 |
| | O₂/% | | 11.96 |
| | NOx/(mg/Nm³) | | 24.6 |
| | SO₂ /(mg/Nm³) | | 0.53 |
| | Dust /(mg/Nm³) | | 0 |

Reference throughout this specification to " one embodiment," "an example," "a specific example," or the like means that a particular feature, structure, material, or characteristic described in connection with the embodiment or example is included in at least one embodiment or example of the present disclosure. In this specification, the schematic representation of the above terms does not necessarily refer to the same embodiment or example. Furthermore, the described features, structures, materials, or characteristics may be combined in any suitable manner in one or more embodiments or examples.

Merely examples and illustrations of the present invention are described above. Various modifications, additions, or equivalent substitutions made to the specific embodiments described herein by those skilled in the art, without departing from the spirit of the present application or exceeding the scope defined by the appended claims, shall fall within the scope of protection of the present application.

## Claims

1. A preparation method of a polyhydric alcohol amine absorbent for flue gas with low CO₂ partial pressure, comprising:
preparing the polyhydric amine absorbent which is composed of the following components in percentage by mass: 18% to 40% of a main absorbent, 3% to 15% of an auxiliary absorbent, 0.5% to 1.5% of an antioxidant, 0.5% to 1.5% of a corrosion inhibitor, and 42% to 78% of water.

2. The preparation method according to claim 1, wherein the main absorbent comprises one or more of diethylenetriamine, N, N-diethyl ethanolamine and hydroxyethyl ethylenediamine, and has a large absorption capacity for CO₂ and a low regeneration energy consumption; the auxiliary absorbent comprises one or more of mono-ethanolamine, 2-amino-2-methyl-1, 3-propanediol, 2- amino-2- ethyl-1, 3-propanediol and 2-amino-2-methyl-1-propanol, and is quickly combined with CO₂ in a gas-liquid interface to transfer CO₂ to the main absorbent in a liquid phase body in the form of carbamate; the antioxidant comprises one or more of butanone oxime, acetone oxime, hydrazine carbonate, and ammonium sulfite; and the corrosion inhibitor is sodium vanadate.

3. The preparation method according to claim 1, wherein the method is applicable to flue gas consisting of 3% to 7% of CO₂ in volume, 9% to 13% of O₂ in volume, and nitrogen.

4. An application of the polyhydric alcohol amine absorbent for flue gas with low CO₂ partial pressure according to any one of claims 1 to 3, wherein flue gas is cooled by a washing tower, introduced into a bottom of an absorption tower where CO₂ is aborted, discharged from a top of an absorption tower, introduced into a recovery tower for absorbent extraction and finally is discharged; the extracted absorbent which is called rich solution is reintroduced into the absorption tower and is discharged from the bottom of the absorption tower with a part of the rich solution fed back to the top of the absorption tower together with lean solution and other part of the rich solution introduced into a top of a regeneration tower for desorption after being subjected to heat exchange by a lean-rich heat exchanger, the lean absorbent subjected to desorption is fed back into the top of the absorption tower via the lean-rich heat exchanger and a lean solvent cooler; the regenerated gas containing CO₂ from the top of the desorption column is purified by a regeneration cooler and a gas-liquid separator to obtain product gas CO₂; and the condensate water from the regenerated gas is refluxed to a lean absorbent inlet pipeline of the absorption water.
